# EUROPEAN PATENT SPECIFICATION

(11) **EP 0 622 798 B1**
(45) Date of publication and mention of the grant of the patent: **23.12.1998**
(21) Application number: 94302987.6
(22) Date of filing: 26.04.1994
(51) Int. Cl.: G11B 20/10, H04L 25/03

(54) **Signal equalizer**
Signalentzerrer
Egaliseur de signal

(30) Priority: 26.04.1993 JP 99240/93
(43) Date of publication of application: 02.11.1994
(73) Proprietor: KABUSHIKI KAISHA TOSHIBA, Kawasaki-shi, Kanagawa-ken 210 (JP)
(72) Inventor: Hirayama, Koichi, c/o Intellectual Property Div., Tokyo (JP)
(74) Representative: Muir, Ian R.

(56) References cited:
- EP-A- 0 147 550
- EP-A- 0 492 419
- PATENT ABSTRACTS OF JAPAN vol. 15, no. 434 (E-1129) 6 November 1991 & JP-A-03 181 218 (HITACHI LTD.) 7 August 1991

## Description

The present invention relates to a signal equalizer which performs a waveform equalization for a digital data sequence reproduced from a digital data record medium, such as, an optical disc and a magnetic disc.

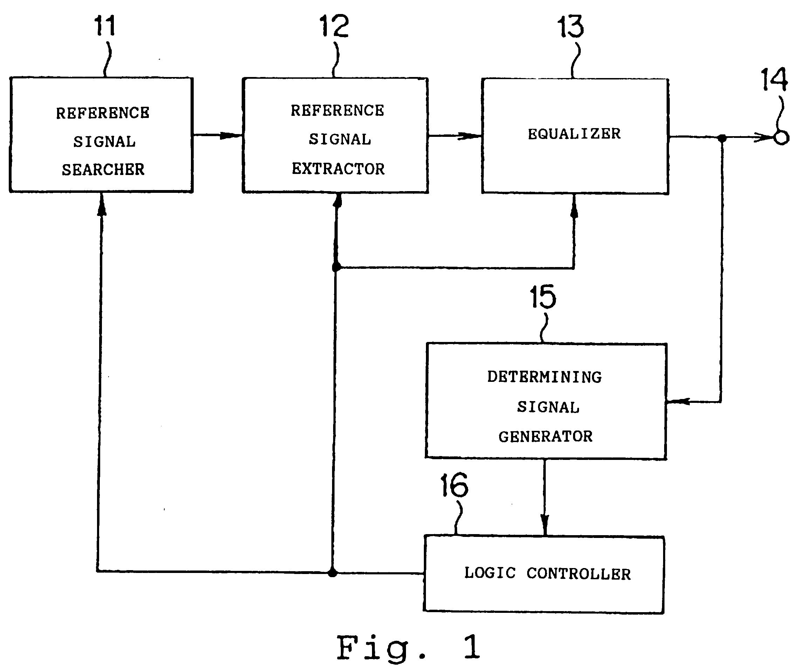

A known apparatus for automatically equalizing waveforms of signals reproduced from record medium, for example optical discs, has been constructed, as shown in Figure 1. Generally, in such record medium a specified data pattern sequence, a so-called reference signal or a training signal, is recorded on a predetermined position thereof for use in the automatic waveform equalization.

Referring now to Figure 1, a reference signal is searched for by a reference signal searcher 11. The reference signal searched for by the reference signal search section 11 is extracted by a reference signal extractor 12, and then applied to an equalizer 13. The equalizer 13 performs a waveform equalization for the extracted reference signal and feeds the equalized signal to an output terminal 14. The equalized signal output from the equalizer 13 is also input to a determining signal generator 15. The determining signal generator 15 generates error information by comparing the waveform or frequency spectrum of the equalized signal from the equalizer 13 with a target characteristic signal of the so-called reference signal or training signal. This error information is input to a logic controller 16. The logic controller 16 controls the equalizing characteristic of the equalizer 13 so as to make the waveform or frequency spectrum characteristic of the equalizer 13 close to the target characteristic signal based on the error information. The logic controller 16 also controls reproducing apparatus for the search of the reference signal.

As described above, the known waveform equalization system corrects the waveform equalization characteristic based on error information by trial reproduction of a predetermined reference signal and then determining whether there is an error, i.e. a difference from the target characteristic, or not.

The known waveform equalization system is time inefficient, because it needs extra time for reproducing the recorded signal and then for searching for reference signals from the reproduced signals. Further, once having determined a waveform equalization characteristic, the characteristic is maintained until the reproduction of one disc terminates. It would be better to modify the waveform equalization characteristic according to the recording positions on the disc. However, this known system could not respond to such a demand. To respond to this demand, suitable reference signals must be recorded at different positions (e.g. at an outer recording area, an intermediate recording area, and an inner recording area of a disc), and the waveform equalization characteristic must be established for each recording area of the disc. As the reference signal is a type of finite length integrated signal, this known system has the problem that if disturbances occur because of defects of the record medium, it becomes difficult to preserve normal operation. Further, the conventional system has the problem that certain areas must be reserved on the record medium for recording the reference signal, thus resulting in a reduction of the amount of information recordable on the record medium.

EP-A-0147550 discloses signal equalizer apparatus that does not rely on a training signal but which uses the relative timing of data pulses to obtain corrective signal information to adapt the equalization of the data signal.

The present invention seeks to provide a signal equalizer which is able to establish a waveform equalization characteristic which is effective in time utilisation.

The present invention also seeks to provide a signal equalizer which is able to determine a waveform equalization characteristic during a normal signal reproducing operation.

Still further the present invention seeks to provide a signal equalizer which is able to endure some disturbances, i.e. defects, in the record medium.

Further the present invention seeks to provide a signal equalizer which is able to carry out an improved waveform equalization over a whole record area to make good use of the record medium.

According to the present invention there is provided a signal equalizer for equalizing a waveform of a digital data sequence, characterised in that the equalizer comprises:
means for determining an average power spectrum by determining average measurement levels at plural frequencies of the digital data sequence;
error operating means for finding the ratios or differences between equalizing target average levels, which correspond to the plural frequencies and which have been found in advance and corresponding average measurement levels obtained by the determining means; and
controller means for controlling an equalizing characteristic of the equalizer based on the error information obtained by the error operating means.

The signal equalizer of the invention employs an average recording frequency spectrum unconditionally determinable by a data recording modulation system as a reference spectrum. Thus it does not require the recording or use of a reference signal as in the described known equalizer. So, even in a normal signal reproducing operation, the average spectrum of the output signal may be automatically equalized to come close to the target spectrum (or a supervisor spectrum) which has been established based on the reference spectrum and the reproduction limits characteristic.

For a better understanding of the present invention and many of the attendant advantages thereof, reference will now be made by way of example to the accompanying drawings, wherein:
Figure 1 is a diagram showing a waveform equalizing apparatus known to the applicant;
FIGURE 2A is a diagram showing one embodiment of a signal equalizer according to the present invention;
FIGURES 2B to 2D are diagrams showing detailed constructions of the units 22, 23 and 24 of FIGURE 2A;
FIGURE 3A is an eye pattern diagram of signal prior to equalization in the equalizer 22 of FIGURE 2A, for explaining the operation of the equalizer according to the present invention;
FIGURE 3B is a graph showing a power spectrum characteristic of signal prior to equalization, for explaining the operation of the equalizer according to the present invention;
FIGURE 4 is a diagram showing exemplary tap coefficients, for explaining the operation of the equalizer according to the present invention;
FIGURE 5A is an eye pattern diagram of signal after equalization in the equalizer 22 in FIGURE 2A, for explaining the operation of the equalizer according to the present invention;
FIGURE 5B is a graph showing a power spectrum characteristic after the equalization, for explaining the operation of the equalizer according to the present invention;
FIGURE 6A is a block diagram showing another embodiment of a signal equalizer according to the present invention; and
FIGURE 6B shows a detailed construction of the determining signal generator 54 of FIGURE 6A.

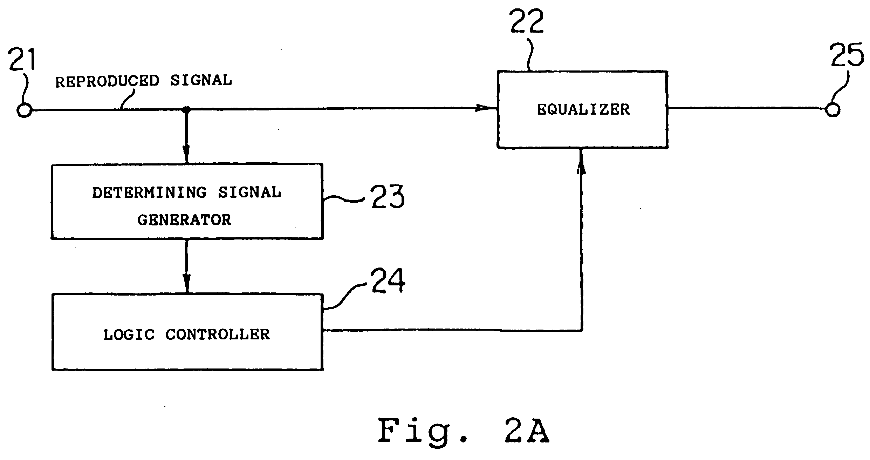

The present invention will be described in detail with reference to the FIGURES 2A through 6B.

Referring now to FIGURES 2A to 2D, a first embodiment of a signal equalizer according to the present invention will be described in detail. In FIGURE 2A, an input terminal 21 receives a reproduced signal (or a digital data sequence) reproduced from record medium (not shown) such as an optical disc. This reproduced signal is applied to an equalizer 22 and a determining signal generator 23. The equalizer 22 equalizes the waveform of the input reproduced signal, and feeds the equalized signal to an output terminal 25.

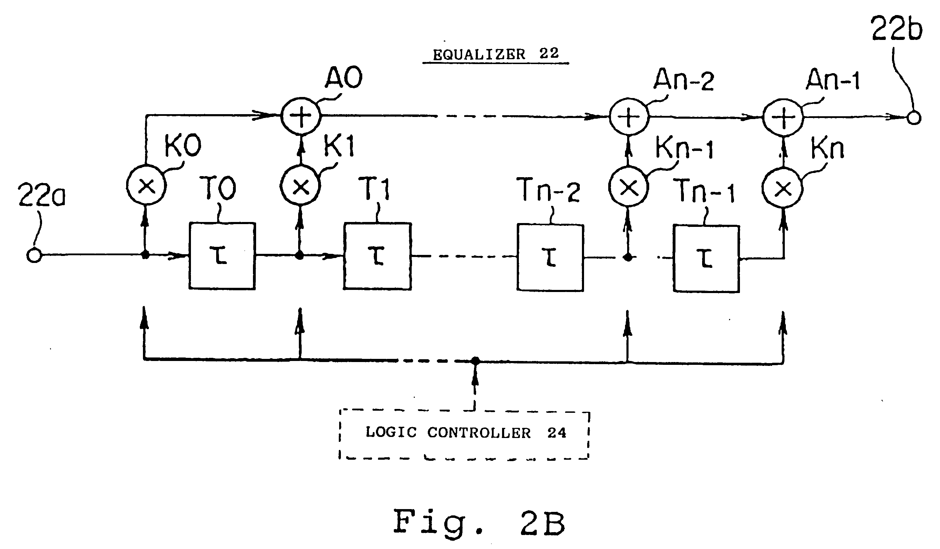

The equalizer 22 is constructed as shown in FIGURE 2B. In FIGURE 2B, the signal on an input terminal 22a is delayed by a period of one sample (i.e., a time period of τ) in passing through each of n delay units T0 through Tn-1 connected in series, wherein n is an even number. Further n+1 multiplier coefficient registers K0 through Kn are connected to the input terminals and output terminals of the delay units T0 through Tn-1, respectively. The outputs of the coefficient registers K0 through Kn are sequentially added with the input signal 22a by adders A0 through An-1 and then the output of the adder An-1 is fed to the output terminal 22b. Here, if the coefficients of coefficient registers K0 through kn are controlled by control signals for equalization. the waveform equalization characteristic will be adjusted. The control signals for equalization are provided from a logic controller 24 which will be described later.

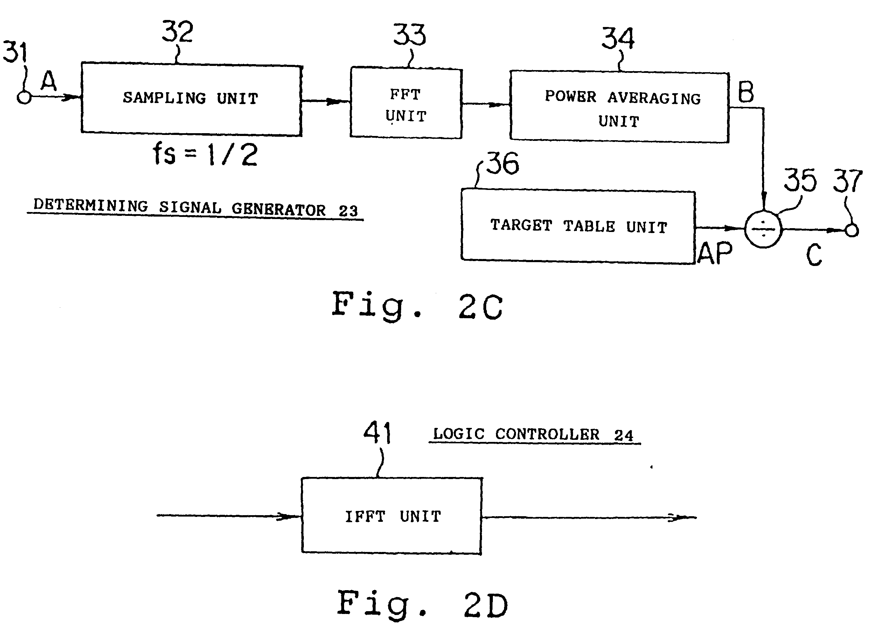

The determining signal generator 23 is constructed as shown in FIGURE 2C. In FIGURE 2C the reproduced signal on the input terminal 21 of FIGURE 2A is supplied to a sampling unit 32 via an input terminal 31 of the generator 23. The sampling unit 32 samples the input reproduced signal every time period (τ) of the delay line tap coefficients, and supplies the sampled signal to a fast Fourier transform (FFT) unit 33. Thus a power spectrum of the sampled signal is obtained as a result of the FFT operation of the unit 33. This power spectrum information is input to a power averaging unit 34. The information of each frequency is averaged for preset times of execution so as to result in an average power spectrum B. Further a determining signal generator 23 has a target table unit 36. Particular data of the power spectrum for the recording data sequence power spectrum have been previously generated and recorded as a target spectrum AP in reference to a reproduction limit characteristic.

The average power spectrum B and the target spectrum AP corresponding to the average power spectrum B are input to a divider 35. Thus data C which represents a ratio between the average power spectrum B on every frequency and the target power spectrum AP is generated from the divider 35 and fed to an output terminal 37. The logic controller 24 receives the output data C through the output terminal 37. The logic controller 24 includes an inverse fast Fourier transform (IFFT) unit 41, as shown in FIGURE 2D, which performs an IFFT operation on the data C. The result of the IFFT operation is then output as prescribed tap coefficients for the equalizer 22.

According to the above construction the tap coefficients for the equalizer 22 are controlled so that the average power spectrum B and the target power spectrum AP have a predetermined relation therebetween.

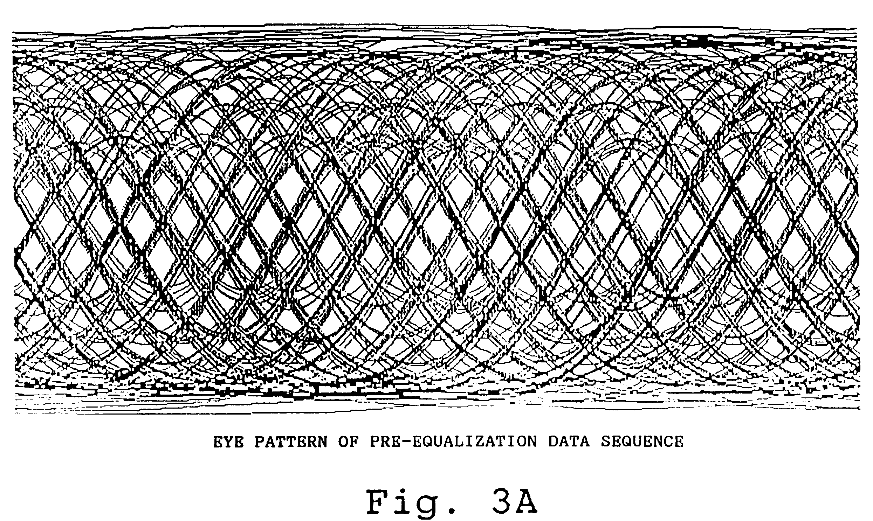

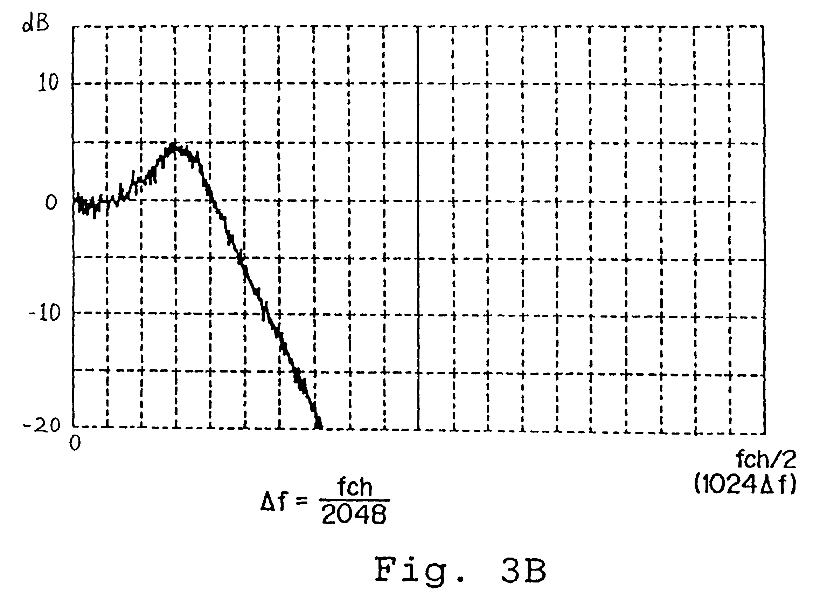

FIGURE 3A shows an eye pattern of pre-equalization data sequence, while FIGURE 3B shows a characteristic diagram of the average power spectrum B obtained by sampling the data sequence at a sampling frequency fch, and then carrying out the fast Fourier transform operation at 2048 points of the frequency spectrum.

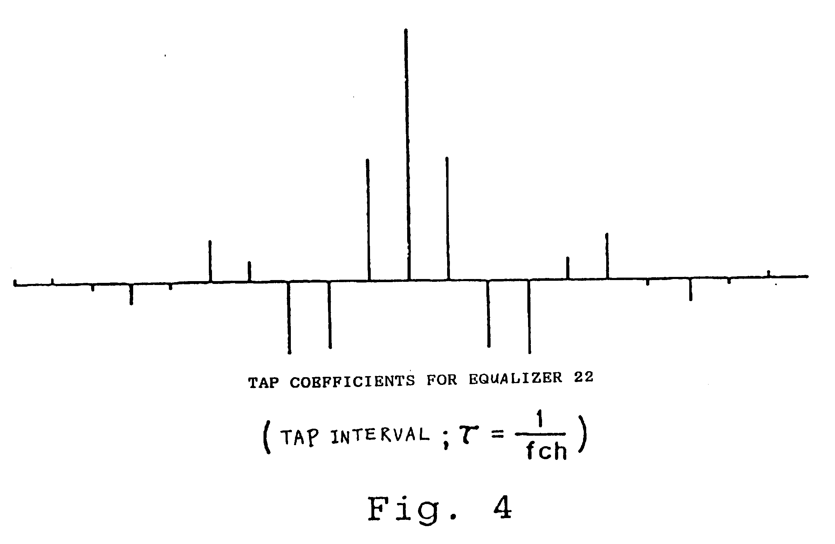

The target power spectrum AP corresponding to the average power spectrum B is stored in the target table unit 36. FIGURE 4 shows the tap coefficients obtained for the equalizer 22, by calculating the data C which represents the ratio of the target power spectrum AP and corresponding average power spectrum B, and by performing the inverse fast Fourier transform operation for the data C.

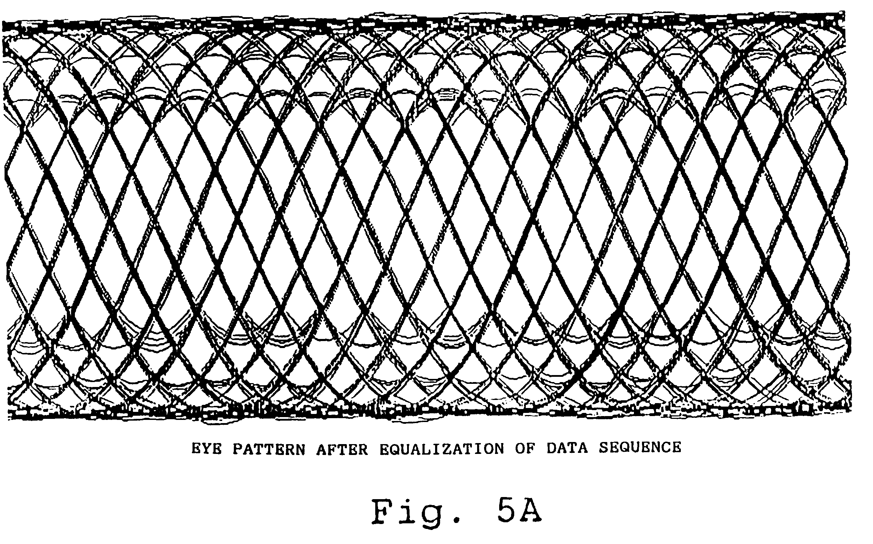

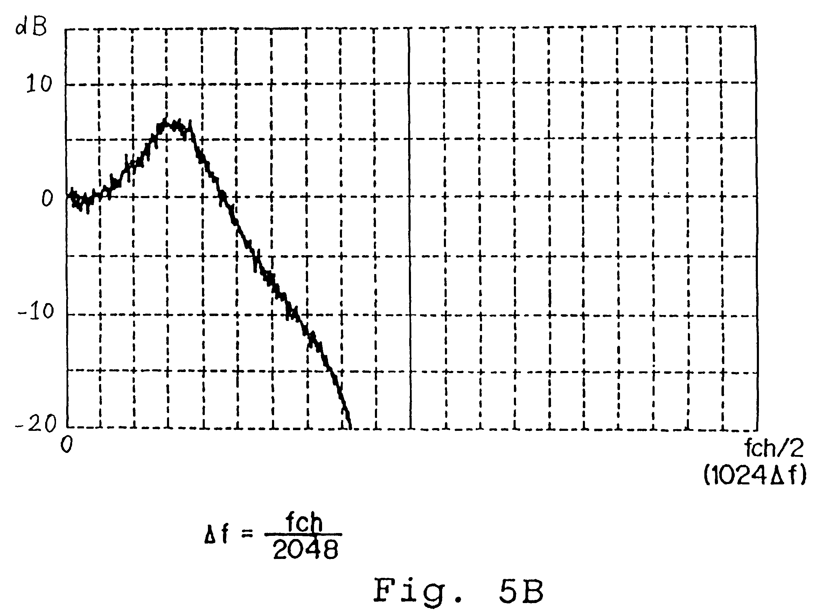

FIGURE 5A shows the eye pattern of the data sequence after a waveform equalization by 15 (n = 14) tap coefficients. FIGURE 5B shows a characteristic diagram of an average power spectrum obtained by sampling the data sequence by sampling frequency fch, and then carrying out the fast Fourier transform operation at 2048 points of the frequency spectrum. This power spectrum was confirmed to be almost equal to the target power spectrum (i.e., the supervisor power spectrum) AP.

The present invention is not limited to the embodiment as mentioned above. For instance, the number of points for the FFT operation or the IFFT operation can be reduced lower than 2048 points, without causing significant problems.

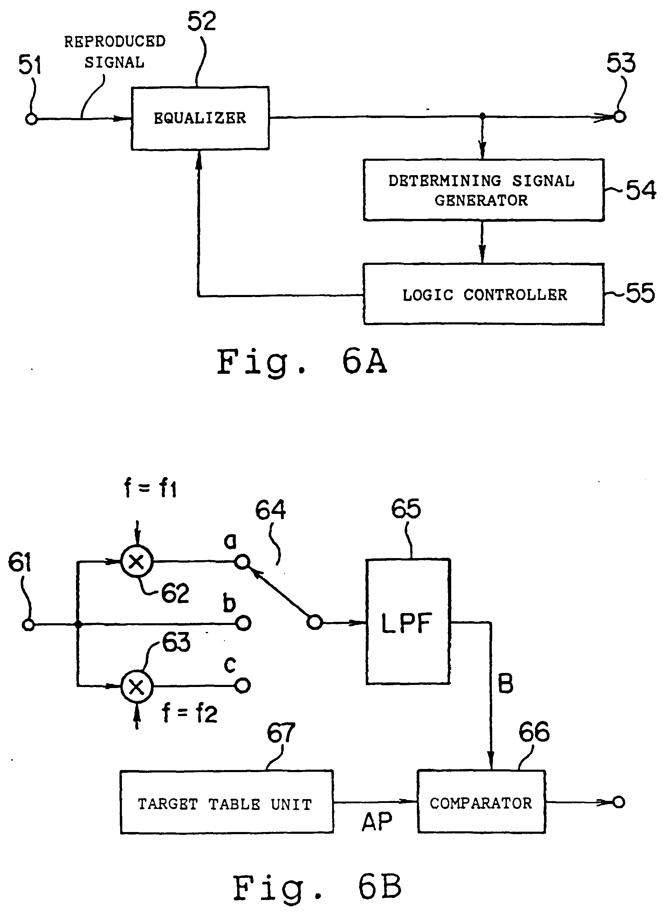

FIGURE 6A shows a block diagram of a signal equalizer according to a second embodiment of the present invention. FIGURE 6B shows a detailed construction of the determining signal generator 54 of FIGURE 6A.

In FIGURE 6A an input terminal 51 receives a reproduced signal. This reproduced signal is applied to an equalizer 52, and wherein the waveform of the input reproduced signal is equalized.

The equalized signal is not only fed to an output terminal 53, but also applied to a determining signal generator 54. The equalizer 52, constructed similar to the equalizer 22 of the first embodiment, is supplied with a control signal for equalization from a logic controller 55.

The determining signal generator 54 is constructed as shown in FIGURE 6B. The determining signal generator 54 having the construction shown in FIGURE 6B generates totally (N-1) pieces of signals which are comprised of the input signal, and multiplied signals of the input signal with the sinewave signals or square wave signals of N pieces of frequencies (where N ≧ 2). The determining signal generator 54 then supplies the (N-1) pieces of signals to a common narrow bandwidth low pass filter (LPF) 65 by changing the signals sequentially. Then the output of the LPF 65 is supplied to and detected by a comparator 66 for obtaining the spectrum data B at the DC component and around the N pieces of frequencies.

When showing an example of N = 2, the output of the equalizer 52 is introduced to an input terminal 61 of the generator 54 as illustrated in detail in FIGURE 6B. The input equalized signal on the input terminal 61 is fed to terminals a, c of a switch 64 after being multiplied with sinewave signals or square wave signals of different frequencies, respectively, at multipliers 62, 63. While another terminal b of the switch 64 is directly applied with the input equalized signal. In the multiplier 62 the input equalized signal is multiplied with a frequency f1, while in the multiplier 63 a frequency f2 is multiplied withthe input equalized signal. A certain signal selected by the switch 64 is smoothed in the LPF 65 and then applied to a comparator 66 as a measured power spectrum B after being smoothed by the LPF 65.

This system is further provided with a target table unit 67. This target table unit 67 stores data of the target spectrum AP which corresponds to each signal on the input terminals a, b, c of the switch 64, and supplies the spectrum data to the comparator 66. The target spectrum AP is defined by adding a reproduction limits characteristic on a power spectrum of a recorded data sequence intrinsic to the recording modulation system the same as the above embodiment.

The comparator 66 outputs an error signal C between the target spectrum AP and a measured spectrum B which corresponds to the target spectrum AP, and supplies the error signal C to the logic controller 55. Then the logic controller 55 controls the tap coefficient of the equalizer 52 based on the error signal C. According to this operation the error signal C can be gradually converged to zero. As a repetition algorithm in this step, a least square algorithm which is conventionally used for an automatic equalization may be employed.

The second embodiment as mentioned above can produce the same effect as the first embodiment. Though the first and second embodiments have been explained as apparatus in which the target table units 36, 67 are originally included and predetermined, it may be beneficial to have flexibility by making the contents of the table changeable from the outside. This allows for different target characteristic depending on the recorded contents of the reproduced signal, as circumstances require.

According to this modification, if a new recording system of an optical disc or of a magnetic disc is developed, this equalization system can be applied to the new recording system. Also, it can be adapted to correspond to reproduced signals from a disc in which the characteristics of the recording data itself has deteriorated.

Further, when the table memory has sufficient capacity it may change read-out modes by making various characteristics simplified.

According to the present invention as described above, it is not necessary to record a reference signal as a record medium, differently from the known waveform equalization systems. Also, it is not necessary to search for recorded reference signals.

Furthermore, time is not needed to reproduce recorded signals for extracting the reference signal therefrom. Also, the present invention will be efficient in time utilisation because a waveform equalization system may be in motion automatically during reproduction. Also a waveform equalization characteristic can obtain the most suitable waveform in compliance with a recording position on a disc by being controlled automatically to the best characteristic anytime until a reproducing operation for one disc is terminated. Additionally it can use a record medium area effectively and can contribute to an increase in recorded density of information since recording of a reference signal is not required. Also controlled operation of waveform equalization can be obtained everytime so that, even if there are disturbances due to crosstalk or defects of the record medium, usual operation can soon be obtained.

As described above, the present invention can provide an extremely advantageous signal equalizer.

That is, the present invention can establish a waveform equalization characteristic which is time efficient by arranging a waveform equalization characteristic whilst performing normal signal reproduction. It can also tolerate disturbances, carry out good waveform equalization all over, and also can make effective use of recorded medium.

While there have been illustrated and described what are at present considered to be preferred embodiments of the present invention, it will be understood by those skilled in the art that various changes and modifications may be made. Therefore, it is intended that the present invention not be limited to the particular embodiment disclosed as the best mode contemplated for carrying out the present invention, but that the present invention includes all embodiments falling within the scope of the appended claims.

## Claims

1. A signal equalizer for equalizing a waveform of a digital data sequence, characterised in that the equalizer comprises:
means (32-34;62-65) for determining an average power spectrum by determining average measurement levels at plural frequencies of the digital data sequence;
error operating means (35,36;66,67) for finding the ratios or differences between equalizing target average levels, which correspond to the plural frequencies and which have been found in advance and corresponding average measurement levels obtained by the determining means; and
controller means (24,55) for controlling an equalizing characteristic of the equalizer based on the error information obtained by the error operating means.

2. A signal equalizer according to claim 1, including input means (21, 31) for receiving the digital data sequence and wherein said means for determining average measurement levels is connected to receive data sequence signals from said input means.

3. A signal equalizer according to claim 1 including output means (53) for outputting an equalized digital data sequence and wherein said means (62-65) for determining average measurement levels is connected to receive data sequence signals from said output means.

4. A signal equalizer as claimed in any preceding claim, wherein the digital data sequence (A) is a normal reproduced signal which does not have a specified training signal for controlling the equalizing characteristic.

5. A signal equalizer as claimed in any preceding claim, wherein the equalizing target average level is a table in which data has been preset.

6. A signal equalizer as claimed in claim 5, wherein the preset data of the table are exchangeable with different externally provided data.

7. A signal equalizer according to claim 1 or 2 or any of claims 4 to 6 appended to claim 1 or 2, wherein the determining means (23) includes a fast Fourier Transform (FFT) unit (33) for analysing a sample of said digital data sequence to obtain a power spectrum, thereof and means (34) for averaging the power spectrum at a plurality of frequencies corresponding to the plural frequencies of the equalizing target levels.

8. A signal equalizer according to claim 3 or any of claims 4 to 6 appended to claim 3 wherein the determining means (54) includes means (61 to 63) for multiplying the digital data sequence sequentially with a plurality of frequencies, a narrow band low pass filter (65) and means (64) for feeding the separately multiplied signals sequentially through said low pass filter (65) to produce a power spectrum averaged at a plurality of frequencies corresponding to the plural frequencies of the equalizing target levels.

## Patentansprüche

1. Signalentzerrer zum Entzerren der Kurvenform einer digitalen Datenfolge, dadurch gekennzeichnet, daß der Entzerrer umfaßt:
Vorrichtungen (32 - 34; 62 - 65) zum Bestimmen eines mittleren Leistungsspektrums durch das Erfassen von mittleren Meßpegeln bei zahlreichen Frequenzen der digitalen Datenfolge;
Fehlerverarbeitungsvorrichtungen (35, 36; 66, 67) zum Bestimmen der Verhältnisse der mittleren Sollentzerrungspegel oder der Unterschiede zwischen mittleren Sollentzerrungspegeln, die den zahlreichen Frequenzen entsprechen und vorab festgestellt worden sind, und entsprechenden mittleren Meßpegeln, die man aus den Bestimmungsvorrichtungen erhält; und
Steuervorrichtungen (24, 55) zum Steuern der Entzerrungseigenschaft des Entzerrers abhängig von der Fehlerinformation, die die Fehlerverarbeitungsvorrichtungen ermitteln.

2. Signalentzerrer nach Anspruch 1, der Eingabevorrichtungen (21, 31) zum Empfangen der digitalen Datenfolge enthält, und in dem die Vorrichtungen zum Bestimmen von mittleren Meßpegeln so geschaltet sind, daß sie Datenfolgesignale aus der Eingabevorrichtung erhalten.

3. Signalentzerrer nach Anspruch 1, der eine Ausgabevorrichtung (53) zum Ausgeben einer entzerrten digitalen Datenfolge enthält, und in dem die Vorrichtungen (62 - 65) zum Bestimmen von mittleren Meßpegeln so geschaltet sind, daß sie Datenfolgesignale aus der Ausgabevorrichtung erhalten.

4. Signalentzerrer nach irgendeinem vorhergehenden Anspruch, wobei die digitale Datenfolge (A) ein normales Wiedergabesignal ist, das kein festgelegtes Trainingssignal zum Steuern der Entzerrungseigenschaft aufweist.

5. Signalentzerrer nach irgendeinem vorhergehenden Anspruch, wobei der mittlere Sollentzerrungspegel eine Tabelle ist, in der Daten voreingestellt sind.

6. Signalentzerrer nach Anspruch 5, wobei die voreingestellten Daten der Tabelle mit von außen bereitgestellten unterschiedlichen Daten austauschbar sind.

7. Signalentzerrer nach Anspruch 1 oder 2 oder irgendeinem der Ansprüche 4 bis 6 wenn abhängig von Anspruch 1 oder 2, wobei die Bestimmungsvorrichtung (23) eine schnelle Fouriertransformations(FFT)-Einheit (33) enthält, die eine Probe der digitalen Datenfolge untersucht, um davon ein Leistungsspektrum zu erhalten, und eine Vorrichtung (34) zum Mitteln des Leistungsspektrums bei einer Anzahl Frequenzen, die den zahlreichen Frequenzen des Sollentzerrungspegels entsprechen.

8. Signalentzerrer nach Anspruch 3 oder irgendeinem der Ansprüche 4 bis 6 wenn abhängig von Anspruch 3, wobei die Bestimmungsvorrichtung (54) enthält: Einrichtungen (61 bis 63), die die digitale Datenfolge nacheinander mit einer Anzahl Frequenzen multiplizieren, ein schmalbandiges Tiefpaßfilter (65) und eine Einrichtung (64), die die getrennt multiplizierten Signale nacheinander durch das Tiefpaßfilter (65) führt, um ein Leistungsspektrum zu erzeugen, das an einer Anzahl Frequenzen gemittelt ist, die der Anzahl Frequenzen des Sollentzerrungspegels entsprechen.

## Revendications

1. Un égaliseur de signal pour égaliser une forme d'onde d'une séquence de données numériques, caractérisé en ce que l'égaliseur comprend :
des moyens (32 à 34 ; 62 à 65) pour déterminer un spectre de puissance moyen en déterminant des niveaux de mesure moyens à un ensemble de fréquences de la séquence de données numériques ;
des moyens d'exploitation d'erreur (35, 36 ; 66, 67) pour trouver les rapports ou les différences entre des niveaux moyens recherchés d'égalisation, lesquels correspondent à l'ensemble de fréquences et ont été trouvés par avance, et des niveaux de mesure moyens correspondants obtenus par les moyens de détermination ; et
des moyens de commande (24, 55) permettant de commander une caractéristique d'égalisation de l'égaliseur sur la base des informations d'erreur obtenues par les moyens d'exploitation d'erreur.

2. Un égaliseur de signal selon la revendication 1, comprenant des moyens d'entrée (21, 31) pour recevoir la séquence de données numériques et dans lequel lesdits moyens permettant de déterminer des niveaux de mesure moyens sont reliés pour recevoir des signaux de la séquence de données à partir desdits moyens d'entrée.

3. Un égaliseur de signal selon la revendication 1, comprenant des moyens de sortie (53) pour délivrer une séquence de données numériques égalisée et dans lequel lesdits moyens (62 à 65) permettant de déterminer des niveaux de mesure moyens sont reliés pour recevoir des signaux de la séquence de données à partir desdits moyens de sortie.

4. Un égaliseur de signal comme revendiqué dans une revendication précédente quelconque, dans lequel la séquence de données numériques (A) est un signal reproduit normal qui ne présente pas un signal de formation spécifié pour commander la caractéristique d'égalisation.

5. Un égaliseur de signal tel que revendiqué dans une revendication précédente quelconque, dans lequel le niveau moyen recherché d'égalisation est un tableau dans laquelle des données ont été réglées au préalable.

6. Un égaliseur de signal tel que revendiqué à la revendication 5 précédente, dans lequel les données réglées au préalable du tableau sont échangeables avec différentes données fournies extérieurement.

7. Un égaliseur de signal selon la revendication 1 ou 2 ou une quelconque des revendications 4 à 6 dans leur dépendance de la revendication 1 ou 2, dans lequel les moyens de détermination (23) comprennent une unité de transformation rapide de Fourrier (TRF) (33) pour analyser un échantillon de ladite séquence de données numériques afin d'obtenir son spectre de puissance, et des moyens (34) pour effectuer la moyenne du spectre de puissance à plusieurs fréquences correspondant à l'ensemble de fréquences des niveaux recherchés d'égalisation.

8. Un égaliseur de signal selon la revendication 3 ou l'une quelconque des revendications 4 à 6 dans leur dépendance de la revendication 3, dans lequel les moyens de détermination (54) comprennent des moyens (61 à 63) pour multiplier de manière séquentielle la séquence de données numériques par plusieurs fréquences, un filtre passe bas à bande étroite (55) et des moyens (64) pour amener séquentiellement les signaux séparément multipliés à travers ledit filtre passe bas (65) afin de produire la moyenne d'un spectre de puissance au niveau de plusieurs fréquences correspondant à l'ensemble de fréquences des niveaux recherchés d'égalisation.
